# EUROPEAN PATENT APPLICATION

(11) **EP 4 333 480 A1**
(43) Date of publication of application: **06.03.2024**
(21) Application number: 22803844.4
(22) Date of filing: 11.05.2022
(51) Int. Cl.: H04W 8/24, H04W 24/00

(54) **REQUEST INFORMATION SENDING METHOD AND APPARATUS, DEVICE, AND STORAGE MEDIUM**

(30) Priority: 18.05.2021 CN 202110539761
(71) Applicant: Vivo Mobile Communication Co., Ltd., Dongguan, Guangdong 523863 (CN)
(72) Inventor: LIU, Xuanbing, Dongguan, Guangdong 523863 (CN); YANG, Xiaodong, Dongguan, Guangdong 523863 (CN); PU, Wenjuan, Dongguan, Guangdong 523863 (CN)
(74) Representative: Petraz, Gilberto Luigi
(86) International application number: PCT/CN2022/092204
(87) International publication number: WO 2022/242522

(57) **Abstract**

This application relates to the technical field of communications, and discloses a request information sending method and apparatus, a device, and a storage medium. The request information sending method in embodiments of this application includes: sending, by a first user equipment UE, configuration request information to a network side device, where the configuration request information is used to indicate a configuration resource expected by the first UE.

## Description

### CROSS-REFERENCE TO RELATED APPLICATION

This application claims priority to Chinese Patent Application No.202110539761.4 filed on May 18, 2021, which is incorporated herein by reference in its entirety.

### TECHNICAL FIELD

This application relates to the technical field of communications, and specifically, to a request information sending method and apparatus, a device, and a storage medium.

### BACKGROUND

Currently, resources used by a UE (User Equipment, user equipment) are directly configured by a network side device. In this way, a probability that a resource configured by the network side device for the UE does not match the UE is relatively high. For example: a plurality of UEs in a multi-SIM terminal supports cooperative work in a particular band combination, but a band configured by the network side device for a UE in the multi-SIM terminal may not fall in a band combination supported by the UE. This easily causes the plurality of UEs in the multi-SIM terminal not be capable of sending and receiving data simultaneously, affecting data transmission performance of the UEs. It can be learned that, at present, the UE has a problem of relatively poor data transmission performance.

### SUMMARY

Embodiments of this application provide a request information sending method and apparatus, a device, and a storage medium, which can resolve a problem of relatively poor data transmission performance of a UE.

According to a first aspect, a request information sending method is provided, including:
sending, by a first user equipment UE, configuration request information to a network side device, where the configuration request information is used to indicate a configuration resource expected by the first UE.

According to a second aspect, a request information sending method is provided, including:
receiving, by a network side device, configuration request information sent by a first user equipment UE, where the configuration request information is used to indicate a configuration resource expected by the first UE.

According to a third aspect, a request information sending apparatus is provided, including:
a sending module, configured to send configuration request information to a network side device, where the configuration request information is used to indicate a configuration resource expected by a first UE.

According to a fourth aspect, a request information sending apparatus is provided, including:
a receiving module, configured to receive configuration request information sent by a first user equipment UE, where the configuration request information is used to indicate a configuration resource expected by the first UE.

According to a fifth aspect, a UE is provided, where the UE is a first UE, and includes a processor, a memory, and a program or an instruction stored in the memory and executable on the processor, where when the program or the instruction is executed by the processor, steps of the request information sending method according to the first aspect are implemented.

According to a sixth aspect, a UE is provided, where the UE is a first UE, and includes a processor and a communication interface, where the processor or the communication interface is configured to send configuration request information to a network side device, and the configuration request information is used to indicate a configuration resource expected by the first UE.

According to a seventh aspect, a network side device is provided, including a processor, a memory, and a program or an instruction stored in the memory and executable on the processor, where when the program or the instruction is executed by the processor, steps of the request information sending method according to the second aspect are implemented.

According to an eighth aspect, a network side device is provided, including a processor and a communication interface, where the communication interface is configured to receive configuration request information sent by a first user equipment UE, where the configuration request information is used to indicate a configuration resource expected by the first UE.

According to a ninth aspect, a readable storage medium is provided, storing a program or an instruction, where when the program or the instruction is executed by a processor, steps of the request information sending method according to the first aspect are implemented; or when the program or the instruction is executed by a processor, steps of the request information sending method according to the second aspect are implemented.

According to a tenth aspect, a chip is provided, including a processor and a communication interface, where the communication interface is coupled to the processor, and the processor is configured to run a program or an instruction to implement steps of the request information sending method according to the first aspect; or to implement steps of the request information sending method according to the second aspect.

According to an eleventh aspect, a computer program product is provided, stored in a non-volatile storage medium, where the program product is executed by at least one processor to implement steps of the request information sending method according to the first aspect or the second aspect.

According to a twelfth aspect, a communication device is provided, configured to perform steps of the request information sending method according to the first aspect or the second aspect.

In the embodiments of this application, a first user equipment UE sends configuration request information to a network side device, where the configuration request information is used to indicate a configuration resource expected by the first UE. In this way, the network side device can provide a configuration for the first UE based on the configuration request information sent by the first UE, so that data transmission performance of a UE can be improved. For example, for a UE supporting a band combination, the network side device can configure, for the first UE based on the configuration request information sent by the first UE, a band within a band combination supported by the first UE, so that a plurality of UEs of a multi-SIM terminal can transmit and receive data simultaneously, thereby improving data transmission performance of the UEs of the multi-SIM terminal.

### BRIEF DESCRIPTION OF THE DRAWINGS

FIG. 1 is a block diagram of a wireless communication system to which an embodiment of this application is applicable;
FIG. 2 is a first flowchart of a request information sending method according to an embodiment of this application;
FIG. 3 is a second flowchart of a request information sending method according to an embodiment of this application;
FIG. 4 is a third flowchart of a request information sending method according to an embodiment of this application;
FIG. 5 is a fourth flowchart of a request information sending method according to an embodiment of this application;
FIG. 6 is a fifth flowchart of a request information sending method according to an embodiment of this application;
FIG. 7 is a sixth flowchart of a request information sending method according to an embodiment of this application;
FIG. 8 is a first structural diagram of a request information sending apparatus according to an embodiment of this application;
FIG. 9 is a second structural diagram of a request information sending apparatus according to an embodiment of this application;
FIG. 10 is a third structural diagram of a request information sending apparatus according to an embodiment of this application;
FIG. 11 is a fourth structural diagram of a request information sending apparatus according to an embodiment of this application;
FIG. 12 is a fifth structural diagram of a request information sending apparatus according to an embodiment of this application;
FIG. 13 is a sixth structural diagram of a request information sending apparatus according to an embodiment of this application;
FIG. 14 is a structural diagram of a communication device according to an embodiment of this application;
FIG. 15 is a structural diagram of a UE according to an embodiment of this application; and
FIG. 16 is a structural diagram of a network side device according to an embodiment of this application.

### DETAILED DESCRIPTION

The technical solutions in embodiments of this application are clearly described in the following with reference to the accompanying drawings in the embodiments of this application. Apparently, the described embodiments are merely some rather than all of the embodiments of this application. All other embodiments obtained by a person of ordinary skill in the art based on the embodiments of this application fall within the protection scope of this application.

In this specification and the claims of this application, the terms "first", "second", and so on are intended to distinguish similar objects, but do not necessarily indicate a specific order or sequence. It should be understood that the terms used in such a way are interchangeable in proper circumstances, so that the embodiments of this application can be implemented in other sequences than the sequence illustrated or described herein. In addition, the objects distinguished by "first" and "second" are usually of one type, and there is no limitation on quantities of the objects. For example, there may be one or more first objects. In addition, "and/or" in this specification and the claims indicate at least one of the connected objects, and the character "/" usually indicates an "or" relationship between the associated objects.

It should be noted that, the technologies described in the embodiments of this application are not limited to a Long Term Evolution (Long Term Evolution, LTE)/LTE-Advanced (LTE-Advanced, LTE-A) system, and can be further used in other wireless communication systems, such as Code Division Multiple Address (Code Division Multiple Access, CDMA), Time Division Multiple Access (Time Division Multiple Access, TDMA), Frequency Division Multiple Access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the described technologies can be used not only for the above-mentioned systems and radio technologies, but also for other systems and radio technologies. The following description describes a New Radio (New Radio, NR) system for exemplary purposes, and uses NR terms in most of the following descriptions, but these technologies are also applicable to applications other than the NR system application, such as a 6^{th} generation (6^{th} Generation, 6G) communication system.

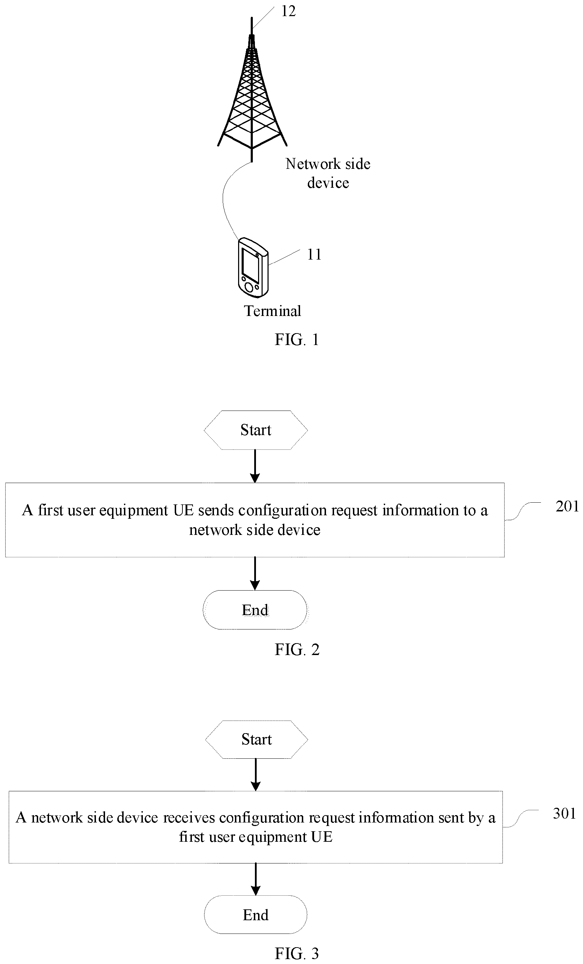

FIG. 1 is a block diagram of a wireless communication system to which an embodiment of this application is applicable. The wireless communication system includes a terminal 11 and a network side device 12. The terminal 11 is a single-SIM terminal or a multi-SIM terminal. For a single-SIM terminal, the terminal includes one UE. For a multi-SIM terminal, the terminal includes a plurality of UEs. It should be noted that, in this embodiment of this application, one UE corresponds to one subscriber identity module (Subscriber Identity Module, SIM) card. Specifically, the terminal 11 may be a mobile phone, a tablet computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), or a vehicular user equipment (Vehicle User Equipment, VUE), a pedestrian user equipment (Pedestrian User Equipment, PUE), and other terminal-side devices. The wearable device includes smart watches, bands, headsets, glasses, or the like. It should be noted that, a specific type of the terminal 11 is not limited in this embodiment of this application. The network side device 12 may be a base station or a core network. The base station may be referred to as a Node B, an evolved Node B, an access point, a base transceiver station (Base Transceiver Station, BTS), a radio base station, a radio transceiver, a basic service set (Basic Service Set, BSS), an extended service set (Extended Service Set, ESS), a node B, an evolved node B (eNB), a home node B, a home evolved node B, a wireless local area network (Wireless Local Area Networks, WLAN) access point, a Wireless Fidelity (Wireless Fidelity, WiFi) node, a transmitting/receiving point (Transmitting Receiving Point, TRP), or some other suitable term in the field, provided that a same technical effect is achieved. The base station is not limited to a specific technical term. It should be noted that, in this embodiment of this application, only a base station in an NR system is used as an example, but the specific type of the base station is not limited.

A request information sending method provided in the embodiments of this application is described in detail below through some embodiments and application scenarios thereof with reference to the accompanying drawings.

FIG. 2 is a first flowchart of a request information sending method according to an embodiment of this application. As shown in FIG. 2, the request information sending method includes the following steps:

Step 201. A first user equipment (User Equipment, UE) sends configuration request information to a network side device, where the configuration request information is used to indicate a configuration resource expected by the first UE.

The first UE may be a UE in a multi-SIM terminal. It should be noted that, the UE may be considered as a signing subject. A plurality of signing subjects can be configured on one terminal device. The signing subject may be represented through a subscriber identity module (Subscriber Identity Module, SIM) card. One SIM card corresponds to one signing subject of a network. The SIM card stores an identifier of the signing subject, that is, an identifier of the UE, such as a user identity (Subscription Permanent Identifier, SUPI) or an international mobile subscriber identity (International Mobile Subscription Identity, IMSI). Therefore, when a plurality of SIM cards are inserted into one terminal or information about a plurality of electronic SIM cards is configured on one terminal, the terminal and different signing subjects may constitute different UEs.

In an optional implementation, a capability of the multi-SIM terminal may be single transmit and single receive, single transmit and dual receive, dual transmit and dual receive, and the like. The multi-SIM terminal supporting single transmit and single receive can send and receive data on one network through one UE. The multi-SIM terminal supporting single transmit and dual receive can send and receive data through one UE at the same time, and can send data through another UE. The multi-SIM terminal supporting dual transmit and dual receive can simultaneously send and receive data through one UE, and send and receive data through another UE. The multi-SIM terminal supporting dual transmit and dual receive can simultaneously send and receive in a plurality of networks in some bands without mutual interference.

In addition, the first UE can support different band capabilities, and the band capabilities supported by the first UE may include: a band supported by the first UE and a band combination supported by the first UE. For example, the band supported by the first UE may include a band (Band) 1, and the band combination supported by the first UE may include: Band 1 + Band 2.

It should be noted that, the first UE sends the configuration request information to the network side device, and the network side device can configure, for the first UE based on the configuration request information, a band within a band combination supported by the first UE, so that a network side device corresponding to each UE of a multi-SIM terminal can configure, for each UE, a band within a band combination supported by the UE, thereby implementing simultaneous data sending and receiving of a plurality of UEs in the multi-SIM terminal.

In addition, the band combination supported by the first UE may include a synchronous band combination supported by the first UE and an asynchronous band combination supported by the first UE. For the synchronous band combination, when the UE works in a plurality of cells or frequencies at the same time, the plurality of cells or frequencies need to be in a synchronous state. For the asynchronous band combination, when the UE works in a plurality of cells or frequencies at the same time, the plurality of cells or frequencies may be in an asynchronous state. For the asynchronous band combination, it may be considered by default that the UE also supports a synchronous working state, that is, for the asynchronous band combination, the plurality of cells in which the UE works at the same time in the band combination may also be in the synchronous state.

It should be noted that, the configuration resource expected by the first UE may also be referred to as a configuration preference of the first UE.

In this embodiment of this application, the first user equipment UE sends the configuration request information to the network side device, where the configuration request information is used to indicate the configuration resource expected by the first UE. In this way, the network side device can provide a configuration for the first UE based on the configuration request information sent by the first UE, so that data transmission performance of a UE can be improved. For example, for a UE supporting a band combination, the network side device can configure, for the first UE based on the configuration request information sent by the first UE, a band within a band combination supported by the first UE, so that a plurality of UEs of a multi-SIM terminal can transmit and receive data simultaneously, thereby improving data transmission performance of the UEs of the multi-SIM terminal.

Optionally, the configuration request information includes at least one of the following:
an expected band configuration, a UE type, an expected measurement configuration, and an unexpected band configuration.

In this implementation, the configuration request information includes at least one of an expected band configuration, a UE type, an expected measurement configuration, and an unexpected band configuration, and the configuration request information may indicate a configuration preference of the first UE, so that the network side device can provide a configuration for the first UE based on the configuration preference of the first UE.

Optionally, the expected band configuration includes at least one of the following:
an expected band, an expected band combination, an expected carrier aggregation (Carrier Aggregation, CA) band, an expected multi-radio access technology dual connectivity (Multi-RAT Dual Connectivity, MR-DC) band combination, and an expected time-division multiplexing pattern (Time-Division Multiplexing pattern, TDM pattern), where the expected TDM pattern includes at least one of the following: a band combination identifier and a carrier aggregation identifier.

The expected band may also be referred to as a band preference (band preference), and may be used to indicate an expected band list, that is, a preferred band list. The expected band may be identified by using at least one preferred band identifier. For example, the expected band may include Band 1 and Band 2.

The expected band combination (Band Combination) may also be referred to as a band combination preference (Band Combination Preference), and may be used to indicate a preferred band combination. The expected band combination may be identified by using at least one preferred band combination identifier. For example, the expected band combination may include band combination 1 and band combination 2.

The expected CA band may also be referred to as a carrier aggregation band preference (CA Bands Preference), and may be used to indicate a preferred band that supports carrier aggregation. For example, the expected CA band may include Band 1 and Band 2.

The expected MR-DC band combination may also be referred to as an MR-DC band combination preference (MR-DC Band Preference), and may be used to indicate a preferred band combination that supports MR-DC.

The expected TDM pattern may also be referred to as a TDM pattern preference (TDM pattern Preference). For example, the expected TDM pattern may include: a TDM pattern 1 UE preference, and/or a TDM pattern 2 UE preference. The TDM pattern 1 UE preference corresponds to Band Combination 1, CA1. The TDM pattern 2 UE preference corresponds to Band Combination 2, CA2.

In this implementation, the expected band configuration includes at least one of an expected band, an expected band combination, an expected CA band, an expected MR-DC band combination, and an expected TDM pattern, so that the network side device can provide a band configuration for the first UE based on the band preference of the first UE.

Optionally, the UE type includes the following item:
a multi-SIM (Multi-SIM) UE type.

In this implementation, the Multi-SIM UE type may indicate that a terminal is a multi-SIM UE. In this way, in order to improve data transmission performance of the multi-SIM UE, the network side device can provide a preferred configuration for the first UE based on the UE type.

Optionally, the Multi-SIM UE type is further used to indicate at least one of the following:
a dual SIM dual active (Dual SIM Dual Active) type;
a dual transmit (Dual Tx) capability; and
a dual receive (Dual Rx) capability.

In this implementation, the network side device can provide a preferred configuration for the first UE based on the dual SIM dual active type, the dual transmit capability, and/or the dual receive capability of the first UE.

Optionally, the expected measurement configuration includes at least one of the following:
a measurement object, a measurement frequency, and a measurement band.

In this implementation, the expected measurement configuration includes at least one of a measurement object, a measurement frequency, and a measurement band, so that the network side device can obtain a measurement object, a measurement frequency, and a measurement band that are preferred by the first UE, and provide a configuration for the first UE based on the measurement object, the measurement frequency, and the measurement band that are preferred by the first UE.

Optionally, the unexpected band configuration includes at least one of the following:
an unexpected band, an unexpected band combination, an unexpected carrier, and an unexpected carrier combination.

In this implementation, the network side device can provide the first UE with no unexpected band configuration based on at least one of the unexpected band, the unexpected band combination, the unexpected carrier, and the unexpected carrier combination of the first UE, thereby providing a preferred configuration for the first UE.

Optionally, the configuration request information is sent through at least one of the following:
a UE assistance information message, a radio resource control (Radio Resource Control, RRC) reconfiguration complete message (RRC Reconfiguration Complete), a UE capability information (UE Capability Information) message, an RRC setup request (RRC Setup Request) message, an RRC setup complete (RRC Setup Complete) message, a registration request (Registration Request) message, and a service request (Service Request) message.

The UE assistance information message may include at least one of the following: a multi-SIM assistance information message and an in-device co-existence (In-device Co-existence, IDC) interference assistance (idc-Assistance) information message. For example, the configuration request information may be included in the multi-SIM assistance information, and/or the configuration request information may be included in the IDC assistance information. The IDC assistance information message may indicate at least one of the following: an affected band, an affected band combination, an affected carrier, and an affected carrier combination. The IDC assistance information message may further indicate: that an affected system is a multi-SIM terminal, or a third generation partnership project (3rd Generation Partnership Project, 3GPP) or radio access technology (Radio Access Technology, RAT) type. The RAT type may include a second generation mobile communication technology (2rd-Generation, 2G), a third generation mobile communication technology (3rd-Generation, 3G), LTE, or NR.

For example, the configuration request information may be sent through the UE capability information message, and may indicate at least one of the following in the UE capability information message based on band combination information: a band preference, a carrier aggregation preference, and an MR-DC carrier aggregation preference.

In this implementation, the configuration request information may be sent through at least one of the UE assistance information message, the radio resource control RRC reconfiguration complete message, the UE capability information message, the RRC setup request message, the RRC setup complete message, the registration request message, and the service request message, so that the first UE can send the configuration request information in a plurality of ways, which is relatively flexible.

Optionally, the sending, by a first UE, configuration request information to a network side device includes:
sending, by the first UE, the configuration request information to the network side device in a case that a preset condition is met, where
the preset condition includes at least one of the following:
   that the first UE is configured to be allowed to send the configuration request information;
   that the first UE is connected to the network side;
   that when a second UE establishes a connection to the network side, the second UE and the first UE belong to a same terminal;
   that the first UE detects that there is IDC interference;
   that the configuration resource expected by the first UE is changed;
   that the first UE has not sent the configuration request information after establishing a connection to the network side; and
   that a prohibit timer (Prohibit Timer) is not running, where the prohibit timer is used to prohibit the first UE from sending the configuration request information to the network side device.

For example, the first UE may send the configuration request information to the network side device when the first UE is configured to be allowed to send the configuration request information and has not sent the configuration request information.

In this implementation, when the first UE is connected to the network side, the first UE sends the configuration request information to the network side device, so that the first UE can report a configuration preference to the network side device in a timely manner. When the second UE establishes a connection to the network side, the first UE sends the configuration request information to the network side device, so that a plurality of UEs can send and receive data at the same time. When the first UE detects that there is IDC interference, the first UE sends the configuration request information to the network side device, so that the network side device can provide a preferred configuration for the first UE based on the configuration request information to alleviate the problem of IDC. When the configuration resource expected by the first UE changes, the first UE sends the configuration request information to the network side device, so that the first UE can report a changed configuration preference to the network side device in a timely manner.

Optionally, before the sending, by a first UE, configuration request information to a network side device, the method further includes:
receiving, by the first UE, configuration negotiation control information sent by the network side device, where the configuration negotiation control information is used to indicate whether the network side device supports processing the configuration request information of the first UE.

The sending, by a first UE, configuration request information to a network side device includes:
sending, by the first UE, the configuration request information to the network side device in a case that the configuration negotiation control information indicates that the network side device supports processing the configuration request information of the first UE.

The configuration negotiation control information may include at least one of the following: an indication enabling configuration preference (Preference Reporting Setup) and an indication enabling band combination preference (Band Combination Preference Setup). The indication enabling configuration preference and/or the indication enabling band combination preference both can be used to indicate that the network side device supports processing the configuration request information of the first UE.

In this implementation, the configuration negotiation control information is used to indicate whether the network side device supports processing the configuration request information of the first UE, so that the first UE is prevented from sending the configuration request information to a network side device that does not support processing the configuration request information.

Optionally, the configuration negotiation control information is obtained through at least one of the following:
a UE capability enquiry (UE Capability Enquiry) message, an RRC reconfiguration (RRC Reconfiguration) message, and system information.

The system information may include at least one of the following: a system information block (System Information Blocks, SIB) 1, a SIB 2, a SIB 3, a SIB 4, a SIB 5, and another SIB message. The another SIB message may be a SIB message other than the SIB 1, the SIB 2, the SIB 3, the SIB 4, and the SIB 5.

In this implementation, the configuration negotiation control information may be obtained through at least one of the UE capability enquiry message, the RRC reconfiguration message, and the system information, so that the first UE can obtain the configuration negotiation control information in a plurality of ways, which is relatively flexible.

Optionally, the configuration negotiation control information includes at least one of the following: duration of a prohibit timer and configuration request indication information.

The prohibit timer is used to prohibit the first UE from sending the configuration request information to the network side device. The configuration request indication information is used to indicate whether the first UE is allowed to send the configuration request information.

In addition, the first UE may send the configuration request information when the prohibit timer is not running. The configuration request information includes duration of a prohibit timer, and it may indicate that a time interval between two transmissions of the configuration request information by the first UE needs to be greater than or equal to the duration of the prohibit timer.

Further, the configuration request indication information may include establishment, release, support, non-support, enable, disable, and so on. For example, the configuration request indication information may include establishment or release. Establishment is used to indicate that the first UE is allowed to send the configuration request information. Release is used to indicate that the first UE is not allowed to send the configuration request information. Alternatively, the configuration request indication information may include support or non-support. Support is used to indicate that the first UE is allowed to send the configuration request information. Non-support is used to indicate that the first UE is not allowed to send the configuration request information. Alternatively, the configuration request indication information may include enable or disable. Enable is used to indicate that the first UE is allowed to send the configuration request information. Disable is used to indicate that the first UE is not allowed to send the configuration request information. In this implementation, it may indicate, through at least one of the duration of the prohibit timer and the configuration request indication information, whether the first UE is allowed to send the configuration request information, so that the first UE is prevented from sending the configuration request information to a network side device that does not support processing the configuration request information.

Optionally, the prohibit timer is started when the first UE has sent the configuration request information to the network side device; and
the first UE is prohibited from sending the configuration request information to the network side device when the prohibit timer is running.

The prohibit timer runs within a valid time. For example, the duration of the prohibit timer is 5s, and within 5s after the prohibit timer is started, the first UE is prohibited from sending the configuration request information to the network side device.

In this implementation, the first UE is prohibited from sending the configuration request information to the network side device when the prohibit timer is running, so that the first UE is prevented from frequently sending the configuration request information to the network side device and affecting normal operation of the network side device.

Optionally, the method further includes:
receiving, by the first UE, configuration information sent by the network side device, where the configuration information is determined by the network side device based on the configuration request information.

In this implementation, the network side device may provide a configuration for the first UE by partially or completely referring to the configuration request information sent by the first UE, so that a plurality of UEs in a multi-SIM terminal can send and receive data at the same time, thereby improving data transmission performance of the UEs of the multi-SIM terminal.

FIG. 3 is a second flowchart of a request information sending method according to an embodiment of this application. As shown in FIG. 3, the request information sending method includes the following steps:

Step 301. A network side device receives configuration request information sent by a first user equipment UE, where the configuration request information is used to indicate a configuration resource expected by the first UE.

Optionally, the configuration request information includes at least one of the following:
an expected band configuration, a UE type, an expected measurement configuration, and an unexpected band configuration.

Optionally, the expected band configuration includes at least one of the following:
an expected band, an expected band combination, an expected carrier aggregation CA band, an expected multi-radio access technology dual connectivity MR-DC band combination, and an expected time-division multiplexing pattern TDM pattern, where the expected TDM pattern includes at least one of the following: a band combination identifier and a carrier aggregation identifier.

Optionally, the UE type includes the following item:
a multi-SIM UE type.

Optionally, the Multi-SIM UE type is further used to indicate at least one of the following:
a dual SIM dual active type;
a dual transmit capability; and
a dual receive capability.

Optionally, the expected measurement configuration includes at least one of the following:
a measurement object, a measurement frequency, and a measurement band.

Optionally, the unexpected band configuration includes at least one of the following:
an unexpected band, an unexpected band combination, an unexpected carrier, and an unexpected carrier combination.

Optionally, the configuration request information is obtained through at least one of the following:
a UE assistance information message, a radio resource control RRC reconfiguration complete message, a UE capability information message, an RRC setup request message, an RRC setup complete message, a registration request message, and a service request message.

Optionally, the receiving, by a network side device, configuration request information sent by a first UE includes:
in a case that a preset condition is met, receiving, by the network side device, the configuration request information sent by the first UE, where
the preset condition includes at least one of the following:
   that the first UE is configured to be allowed to send the configuration request information;
   that the first UE is connected to the network side;
   that when a second UE establishes a connection to the network side, the second UE and the first UE belong to a same terminal;
   that the first UE detects that there is in-device coexistence IDC interference;
   that the configuration resource expected by the first UE is changed;
   that the first UE has not sent the configuration request information after establishing a connection to the network side; and
   that a prohibit timer is not running, where the prohibit timer is used to prohibit the first UE from sending the configuration request information to the network side device.

Optionally, before the receiving, by a network side device, configuration request information sent by a first UE, the method further includes:
sending, by the network side device, configuration negotiation control information to the first UE, where the configuration negotiation control information is used to indicate whether the network side device supports processing the configuration request information of the first UE.

Optionally, the configuration negotiation control information is sent through at least one of the following:
a UE capability enquiry message, an RRC reconfiguration message, and system information.

Optionally, the configuration negotiation control information includes at least one of the following: duration of a prohibit timer and configuration request indication information.

The prohibit timer is used to prohibit the first UE from sending the configuration request information to the network side device. The configuration request indication information is used to indicate whether the first UE is allowed to send the configuration request information.

Optionally, the prohibit timer is started when the first UE has sent the configuration request information to the network side device; and
the first UE is prohibited from sending the configuration request information to the network side device when the prohibit timer is running.

Optionally, the method further includes:
sending, by the network side device, configuration information to the first UE, where the configuration information is determined by the network side device based on the configuration request information.

It should be noted that, this embodiment serves as an implementation of a corresponding network side device in the embodiment shown in FIG. 2. For a specific implementation of this embodiment, refer to related descriptions in the embodiment shown in FIG. 2. To avoid repeated descriptions, details are not described again in this embodiment. In this embodiment, data transmission performance of a UE can be improved.

The methods provided in the embodiments of this application are described below by way of example by using specific embodiments.

### Embodiment 1:

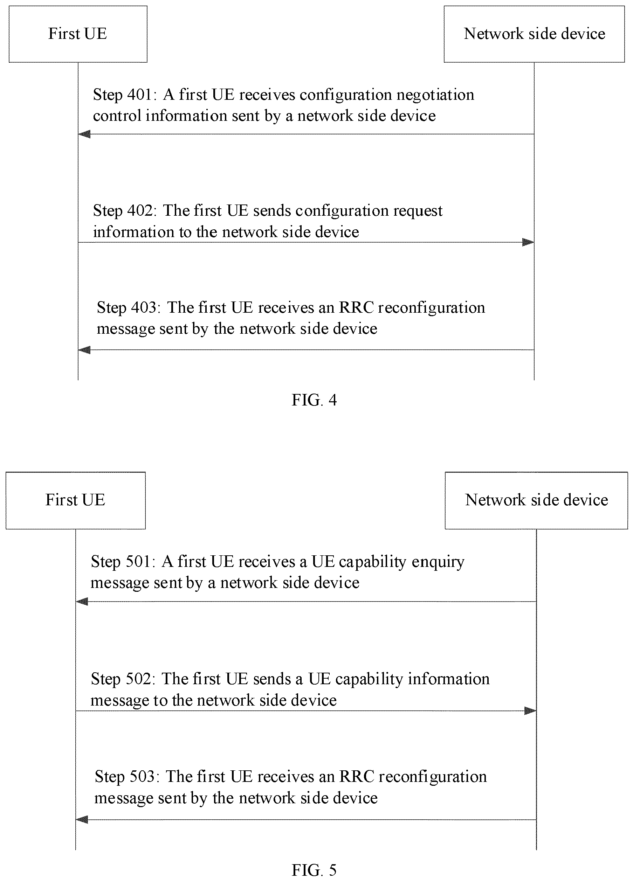

As shown in FIG. 4, the request information sending method may include the following steps:
Step 401: A first UE receives configuration negotiation control information sent by a network side device, where the configuration negotiation control information is used to indicate whether the network side device supports processing configuration request information of the first UE.
Step 402: The first UE sends configuration request information to the network side device, where the configuration request information is used to indicate a configuration resource expected by the first UE.
Step 403: The first UE receives an RRC reconfiguration message sent by the network side device, where the RRC reconfiguration message includes configuration information, and the configuration information is determined by the network side device based on the configuration request information.

It should be noted that, step 401 to step 403 may be performed a plurality of times or cyclically. For example, step 401 to step 403 may be performed in the following order: step 401-step 402-step 403-step 402-step 403.

### Embodiment 2:

As shown in FIG. 5, the request information sending method may include the following steps:
Step 501: A first UE receives a UE capability enquiry message sent by a network side device, where the UE capability enquiry message includes configuration negotiation control information, and the configuration negotiation control information may include at least one of the following: an indication enabling configuration preference and an indication enabling band combination preference.
Step 502: The first UE sends a UE capability information message to the network side device, where the UE capability information message includes configuration request information.

The configuration request information includes at least one of the following:
a band preference, a band combination preference, a TDM pattern preference, and preference information based on band combination capability information. The band combination capability information is capability information reported by the first UE in the UE capability information message.

Step 503: The first UE receives an RRC reconfiguration message sent by the network side device, where the RRC reconfiguration message includes configuration information, the configuration information is determined by the network side device based on the configuration request information, and the configuration information can partially or completely meet a request of the first UE in the configuration request information.

### Embodiment 3:

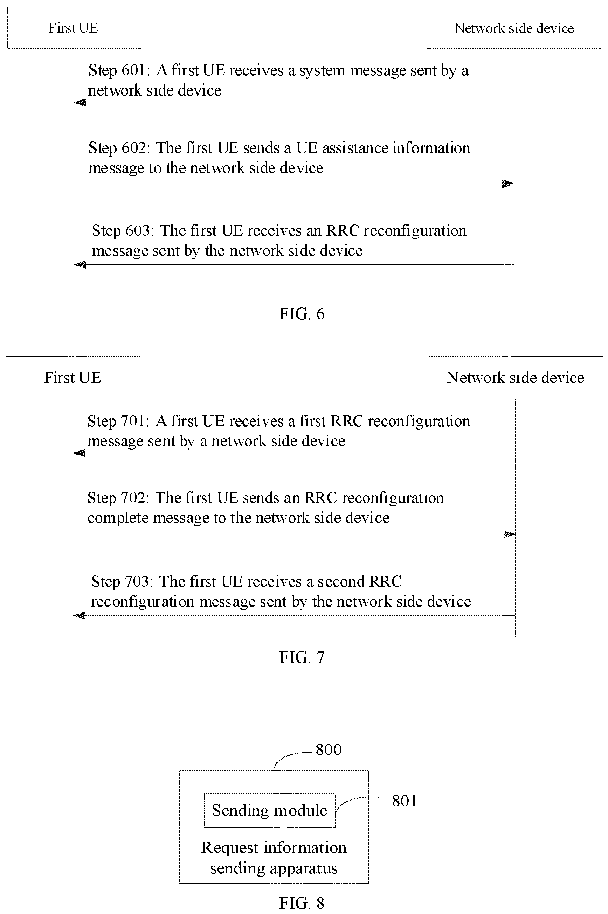

As shown in FIG. 6, the request information sending method may include the following steps:
Step 601: A first UE receives a system message sent by a network side device, where the system message includes configuration negotiation control information, and the configuration negotiation control information is used to indicate whether the network side device supports processing configuration request information of the first UE.

For example, the configuration negotiation control information may include the following information: information indicating that sending the configuration request information by the first UE is supported; and duration of a prohibit timer.

Step 602: The first UE sends a UE assistance information message to the network side device, where the UE assistance information message includes the configuration request information.

In addition, the first UE may send the UE assistance information message to the network side device in a case that a prohibit timer is not running. During running of the prohibit timer, the first UE is not allowed to send the configuration request information. The first UE can send the configuration request information again only after the prohibit timer expires.

It should be noted that, after the first UE sends the configuration request information to the network side device, that is, after the first UE sends the UE assistance information message to the network side device, the first UE starts the prohibit timer.

The configuration request information includes at least one of the following:
a band preference, a band combination preference, a CA band preference, and a TDM pattern preference.

Step 603: The first UE receives an RRC reconfiguration message sent by the network side device, where the RRC reconfiguration message includes configuration information, the configuration information is determined by the network side device based on the configuration request information, and the configuration information can partially or completely meet a request of the first UE in the configuration request information.

### Embodiment 4:

As shown in FIG. 7, the request information sending method may include the following steps:
Step 701: A first UE receives a first RRC reconfiguration message sent by a network side device, where the first RRC reconfiguration message includes configuration negotiation control information, and the configuration negotiation control information may include at least one of the following: an indication enabling configuration preference and an indication enabling band combination preference.
Step 702: The first UE sends an RRC reconfiguration complete message to the network side device, where the RRC reconfiguration complete message includes configuration request information.

The first UE receives the first RRC reconfiguration message, parses the first RRC reconfiguration message, and in a case that the first RRC reconfiguration message does not meet a configuration resource expected by the first UE, the first UE may send the RRC reconfiguration complete message carrying the configuration request information to the network side device.

In addition, the first UE may send the RRC reconfiguration complete message to the network side device in a case that a prohibit timer is not running. After the first UE sends the configuration request information to the network side device, that is, after the first UE sends the RRC reconfiguration complete message to the network side device, the first UE starts the prohibit timer.

The configuration request information includes at least one of the following:
a band preference, a band combination preference, a CA band preference, and a TDM pattern preference.

Step 703: The first UE receives a second RRC reconfiguration message sent by the network side device, where the second RRC reconfiguration message includes configuration information, the configuration information is determined by the network side device based on the configuration request information, and the configuration information can partially or completely meet a request of the first UE in the configuration request information.

In this embodiment of this application, the first UE receives the configuration negotiation control information, and the configuration negotiation control information indicates whether the network side device supports processing the configuration request information of the first UE. The first UE reports the configuration request information, and the configuration request information indicates the configuration resource expected by the first UE. The first UE receives the reconfiguration message. In this way, the network side device can provide a configuration for the first UE based on the configuration request information, which is beneficial for UEs of a multi-SIM terminal to perform dual transmit and dual receive operations, so that data transmission performance of the UEs of the multi-SIM terminal can be improved.

It should be noted that, the request information sending method provided in this embodiment of this application may be performed by a request information sending apparatus or a control module in the request information sending apparatus for performing a request information sending method. In the embodiments of this application, that a request information sending apparatus performs the request information sending method is used as an example to describe the request information sending apparatus provided in the embodiments of this application.

FIG. 8 is a first structural diagram of a request information sending apparatus according to an embodiment of this application. As shown in FIG. 8, a request information sending apparatus 800 includes:
a sending module 801, configured to send configuration request information to a network side device, where the configuration request information is used to indicate a configuration resource expected by a first UE.

Optionally, the configuration request information includes at least one of the following:
an expected band configuration, a UE type, an expected measurement configuration, and an unexpected band configuration.

Optionally, the expected band configuration includes at least one of the following:
an expected band, an expected band combination, an expected carrier aggregation CA band, an expected multi-radio access technology dual connectivity MR-DC band combination, and an expected time-division multiplexing pattern TDM pattern, where the expected TDM pattern includes at least one of the following: a band combination identifier and a carrier aggregation identifier.

Optionally, the UE type includes the following item:
a multi-SIM UE type.

Optionally, the Multi-SIM UE type is further used to indicate at least one of the following:
a dual SIM dual active type;
a dual transmit capability; and
a dual receive capability.

Optionally, the expected measurement configuration includes at least one of the following:
a measurement object, a measurement frequency, and a measurement band.

Optionally, the unexpected band configuration includes at least one of the following:
an unexpected band, an unexpected band combination, an unexpected carrier, and an unexpected carrier combination.

Optionally, the configuration request information is sent through at least one of the following:
a UE assistance information message, a radio resource control RRC reconfiguration complete message, a UE capability information message, an RRC setup request message, an RRC setup complete message, a registration request message, and a service request message.

Optionally, the sending module 801 is specifically configured to:
send the configuration request information to the network side device in a case that a preset condition is met, where
the preset condition includes at least one of the following:
   that the first UE is configured to be allowed to send the configuration request information;
   that the first UE is connected to the network side;
   that when a second UE establishes a connection to the network side, the second UE and the first UE belong to a same terminal;
   that the first UE detects that there is in-device coexistence IDC interference;
   that the configuration resource expected by the first UE is changed;
   that the first UE has not sent the configuration request information after establishing a connection to the network side; and
   that a prohibit timer is not running, where the prohibit timer is used to prohibit the first UE from sending the configuration request information to the network side device.

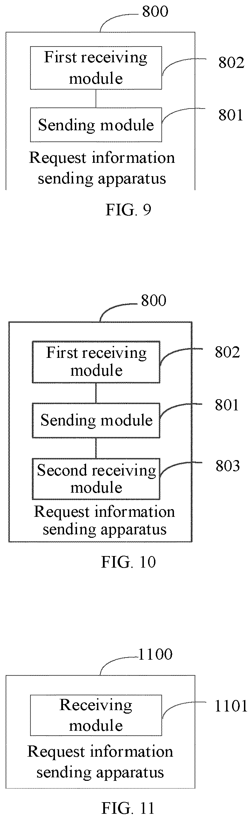

Optionally, as shown in FIG. 9, the apparatus 800 further includes:
a first receiving module 802, configured to receive configuration negotiation control information sent by the network side device, where the configuration negotiation control information is used to indicate whether the network side device supports processing the configuration request information of the first UE.

The sending module 801 is specifically configured to:
send the configuration request information to the network side device in a case that the configuration negotiation control information indicates that the network side device supports processing the configuration request information of the first UE.

Optionally, the configuration negotiation control information is obtained through at least one of the following:
a UE capability enquiry message, an RRC reconfiguration message, and system information.

Optionally, the configuration negotiation control information includes at least one of the following: duration of a prohibit timer and configuration request indication information.

The prohibit timer is used to prohibit the first UE from sending the configuration request information to the network side device. The configuration request indication information is used to indicate whether the first UE is allowed to send the configuration request information.

Optionally, the prohibit timer is started when the first UE has sent the configuration request information to the network side device; and
the first UE is prohibited from sending the configuration request information to the network side device when the prohibit timer is running.

Optionally, as shown in FIG. 10, the apparatus 800 further includes:
a second receiving module 803, configured to receive configuration information sent by the network side device, where the configuration information is determined by the network side device based on the configuration request information.

The request information sending apparatus 800 in this embodiment of this application can improve data transmission performance of a UE.

The request information sending apparatus in this embodiment of this application may be an apparatus, or may be an apparatus or an electronic device having an operating system, or may be a component, an integrated circuit, or a chip in a terminal. The apparatus or the electronic device may be a mobile terminal, or may be a non-mobile terminal. For example, the mobile terminal may include, but is not limited to the types of terminals 11 listed above. The non-mobile terminal may be a server, a network attached storage (Network Attached Storage, NAS), a personal computer (personal computer, PC), a television (television, TV), a teller machine, a self-service machine, or the like. This is not specifically limited in this embodiment of this application.

The request information sending apparatus provided in this embodiment of this application can implement the processes implemented in the method embodiment of FIG. 2 and achieve the same technical effect. To avoid repetition, details are not described herein again.

FIG. 11 is a fourth structural diagram of a request information sending apparatus according to an embodiment of this application. As shown in FIG. 11, a request information sending apparatus 1100 includes:
a receiving module 1101, configured to receive configuration request information sent by a first user equipment UE, where the configuration request information is used to indicate a configuration resource expected by the first UE.

Optionally, the configuration request information includes at least one of the following:
an expected band configuration, a UE type, an expected measurement configuration, and an unexpected band configuration.

Optionally, the expected band configuration includes at least one of the following:
an expected band, an expected band combination, an expected carrier aggregation CA band, an expected multi-radio access technology dual connectivity MR-DC band combination, and an expected time-division multiplexing pattern TDM pattern, where the expected TDM pattern includes at least one of the following: a band combination identifier and a carrier aggregation identifier.

Optionally, the UE type includes the following item:
a multi-SIM E type.

Optionally, the Multi-SIM UE type is further used to indicate at least one of the following:
a dual SIM dual active type;
a dual transmit capability; and
a dual receive capability.

Optionally, the expected measurement configuration includes at least one of the following:
a measurement object, a measurement frequency, and a measurement band.

Optionally, the unexpected band configuration includes at least one of the following:
an unexpected band, an unexpected band combination, an unexpected carrier, and an unexpected carrier combination.

Optionally, the configuration request information is obtained through at least one of the following:
a UE assistance information message, a radio resource control RRC reconfiguration complete message, a UE capability information message, an RRC setup request message, an RRC setup complete message, a registration request message, and a service request message.

Optionally, the receiving module 1101 is specifically configured to:
in a case that a preset condition is met, receive the configuration request information sent by the first UE, where
the preset condition includes at least one of the following:
   that the first UE is configured to be allowed to send the configuration request information;
   that the first UE is connected to the network side;
   that when a second UE establishes a connection to the network side, the second UE and the first UE belong to a same terminal;
   that the first UE detects that there is in-device coexistence IDC interference;
   that the configuration resource expected by the first UE is changed;
   that the first UE has not sent the configuration request information after establishing a connection to the network side; and
   that a prohibit timer is not running, where the prohibit timer is used to prohibit the first UE from sending the configuration request information to the network side device.

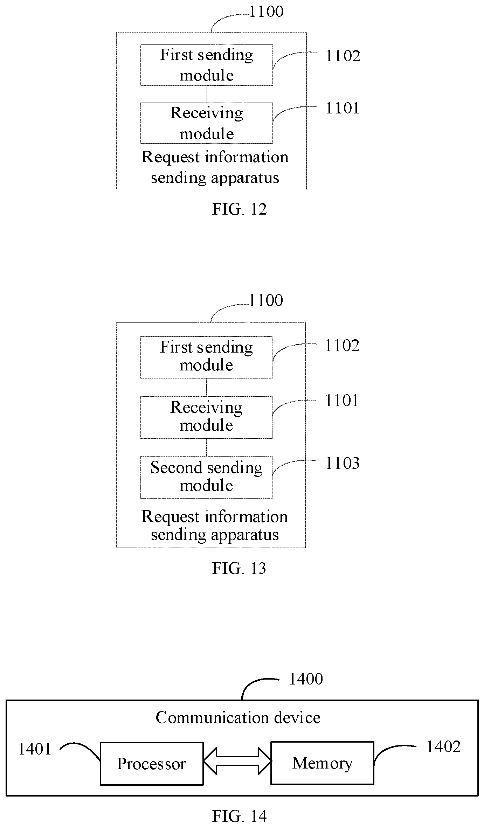

Optionally, as shown in FIG. 12, the apparatus 1100 further includes:
a first sending module 1102, configured to send configuration negotiation control information to the first UE, where the configuration negotiation control information is used to indicate whether the network side device supports processing the configuration request information of the first UE.

Optionally, the configuration negotiation control information is sent through at least one of the following:
a UE capability enquiry message, an RRC reconfiguration message, and system information.

Optionally, the configuration negotiation control information includes at least one of the following: duration of a prohibit timer and configuration request indication information.

The prohibit timer is used to prohibit the first UE from sending the configuration request information to the network side device. The configuration request indication information is used to indicate whether the first UE is allowed to send the configuration request information.

Optionally, the prohibit timer is started when the first UE has sent the configuration request information to the network side device; and
the first UE is prohibited from sending the configuration request information to the network side device when the prohibit timer is running.

Optionally, as shown in FIG. 13, the apparatus 1100 further includes:
a second sending module 1103, configured to send configuration information to the first UE, where the configuration information is determined by the network side device based on the configuration request information.

The request information sending apparatus 1100 in this embodiment of this application can improve data transmission performance of a UE.

The request information sending apparatus in this embodiment of this application may be an apparatus, or may be an apparatus or an electronic device having an operating system, or may be a component, an integrated circuit, or a chip in a terminal. The apparatus or the electronic device may be a mobile terminal, or may be a non-mobile terminal. For example, the mobile terminal may include, but is not limited to the types of terminals 11 listed above. The non-mobile terminal may be a server, a network attached storage (Network Attached Storage, NAS), a personal computer (personal computer, PC), a television (television, TV), a teller machine, a self-service machine, or the like. This is not specifically limited in this embodiment of this application.

The request information sending apparatus provided in this embodiment of this application can implement the processes implemented in the method embodiment of FIG. 3 and achieve the same technical effect. To avoid repetition, details are not described herein again.

Optionally, as shown in FIG. 14, an embodiment of this application further provides a communication device 1400, including a processor 1401, a memory 1402, and a program or an instruction stored in the memory 1402 and executable on the processor 1401. For example, when the communication device 1400 is a terminal, and when the program or the instruction is executed by the processor 1401, the processes of the foregoing embodiment of the request information sending method on the side of the first UE are implemented, and the same technical effects can be achieved. When the communication device 1400 is a network side device, and when the program or the instruction is executed by the processor 1401, the processes of the foregoing embodiment of the request information sending method on the side of the network side are implemented, and the same technical effects can be achieved. To avoid repetition, details are not described herein again.

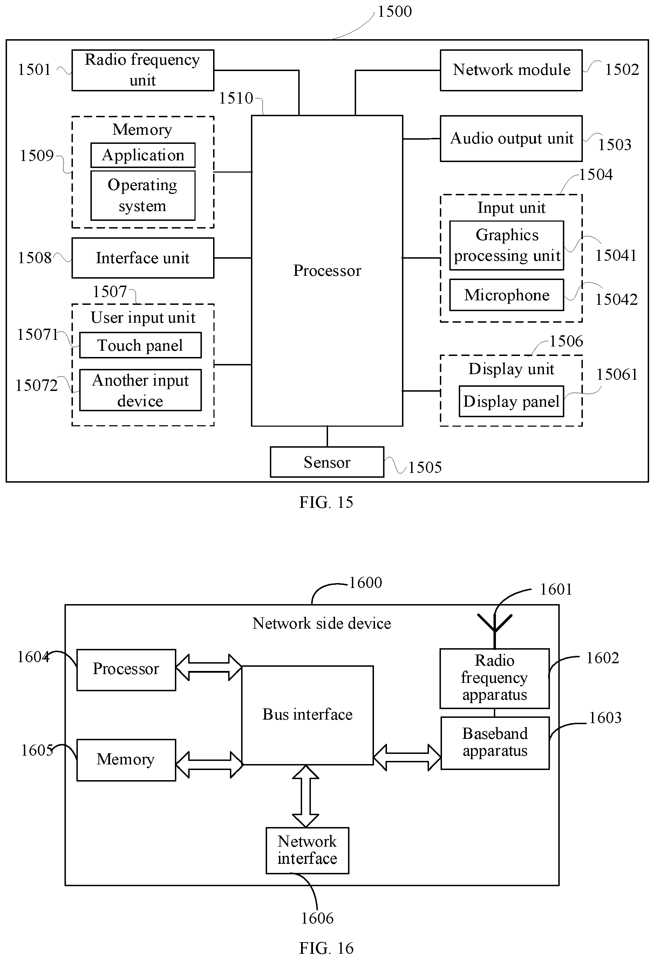

An embodiment of this application further provides a UE. The UE is a first UE, and includes a processor and a communication interface. The processor or the communication interface is configured to send configuration request information to a network side device. The configuration request information is used to indicate a configuration resource expected by the first UE. The embodiment of the UE corresponds to the method embodiment on the side of the UE. The implementation processes and implementations of the method embodiment are all applicable to the embodiment of the UE, and the same technical effects can be achieved. Specifically, FIG. 15 is a schematic diagram of a hardware structure of a UE that implements an embodiment of this application.

The UE 1500 includes, but is not limited to: at least some components in a radio frequency unit 1501, a network module 1502, an audio output unit 1503, an input unit 1504, a sensor 1505, a display unit 1506, a user input unit 1507, an interface unit 1508, a memory 1509, and a processor 1510.

A person skilled in the art may understand that the UE 1500 may further include a power supply (such as a battery) for supplying power to each component. The power supply may be logically connected to the processor 1510 by using a power management system, thereby implementing functions, such as charging, discharging, and power consumption management, by using the power management system. The structure of the UE shown in FIG. 15 does not constitute any limitation on the UE. The UE may include more or fewer components than those shown in the figure, or some components may be combined, or different component deployments may be used. Details are not described herein again.

It should be understood that, in this embodiment of this application, the input unit 1504 may include a graphics processing unit (Graphics Processing Unit, GPU) 15041 and a microphone 15042. The graphics processing unit 15041 processes image data from static pictures or videos captured by an image capture apparatus (such as a camera) in a video capture mode or an image capture mode. The display unit 1506 may include a display panel 15061. The display panel 15061 may be configured in a form of a liquid crystal display, an organic light-emitting diode, or the like. The user input unit 1507 includes a touch panel 15071 and another input device 15072. The touch panel 15071 is also referred to as a touchscreen. The touch panel 15071 may include two parts: a touch detection apparatus and a touch controller. The another input device 15072 may include, but is not limited to, a physical keyboard, a functional button (such as a sound volume control button or a power button), a trackball, a mouse, or a joystick. Details are not described herein.

In this embodiment of this application, the radio frequency unit 1501 receives downlink data from the network side device and then sends the data to the processor 1510 for processing; and additionally, sends uplink data to the network side device. Usually, the radio frequency unit 1501 includes, but is not limited to, an antenna, at least one amplifier, a transceiver, a coupler, a low noise amplifier, a duplexer, and the like.

The memory 1509 may be configured to store a software program or instruction and various data. The memory 1509 may mainly include a program or instruction storage area and a data storage area. The program or instruction storage area may store an operating system, an application or instruction required by at least one function (for example, a sound playing function and an image playing function), and the like. In addition, the memory 1509 may include a high speed random access memory, and may also include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, such as at least one magnetic disk storage device, a flash memory device, or another non-volatile solid-state storage device.

The processor 1510 may include one or more processing units. Optionally, the processor 1510 may integrate an application processor and a modem processor. The application processor mainly processes the operating system, a user interface, the application program or instruction, and the like. The modem processor mainly processes wireless communication and is, for example, a baseband processor. It may be understood that, the modem processor may alternatively not be integrated into the processor 1510.

The radio frequency unit 1501 is configured to send the configuration request information to the network side device. The configuration request information is used to indicate the configuration resource expected by the first UE.

Optionally, the configuration request information includes at least one of the following:
an expected band configuration, a UE type, an expected measurement configuration, and an unexpected band configuration.

Optionally, the expected band configuration includes at least one of the following:
an expected band, an expected band combination, an expected carrier aggregation CA band, an expected multi-radio access technology dual connectivity MR-DC band combination, and an expected time-division multiplexing pattern TDM pattern, where the expected TDM pattern includes at least one of the following: a band combination identifier and a carrier aggregation identifier.

Optionally, the UE type includes the following item:
a multi-SIM UE type.

Optionally, the Multi-SIM UE type is further used to indicate at least one of the following:
a dual SIM dual active type;
a dual transmit capability; and
a dual receive capability.

Optionally, the expected measurement configuration includes at least one of the following:
a measurement object, a measurement frequency, and a measurement band.

Optionally, the unexpected band configuration includes at least one of the following:
an unexpected band, an unexpected band combination, an unexpected carrier, and an unexpected carrier combination.

Optionally, the configuration request information is sent through at least one of the following:
a UE assistance information message, a radio resource control RRC reconfiguration complete message, a UE capability information message, an RRC setup request message, an RRC setup complete message, a registration request message, and a service request message.

Optionally, the radio frequency unit 1501 is further configured to:
send, by the first UE, the configuration request information to the network side device in a case that a preset condition is met, where
the preset condition includes at least one of the following:
   that the first UE is configured to be allowed to send the configuration request information;
   that the first UE is connected to the network side;
   that when a second UE establishes a connection to the network side, the second UE and the first UE belong to a same terminal;
   that the first UE detects that there is in-device coexistence IDC interference;
   that the configuration resource expected by the first UE is changed;
   that the first UE has not sent the configuration request information after establishing a connection to the network side; and
   that a prohibit timer is not running, where the prohibit timer is used to prohibit the first UE from sending the configuration request information to the network side device.

Optionally, the radio frequency unit 1501 is further configured to:
receive configuration negotiation control information sent by the network side device, where the configuration negotiation control information is used to indicate whether the network side device supports processing the configuration request information of the first UE; and
send the configuration request information to the network side device in a case that the configuration negotiation control information indicates that the network side device supports processing the configuration request information of the first UE.

Optionally, the configuration negotiation control information is obtained through at least one of the following:
a UE capability enquiry message, an RRC reconfiguration message, and system information.

Optionally, the configuration negotiation control information includes at least one of the following: duration of a prohibit timer and configuration request indication information.

The prohibit timer is used to prohibit the first UE from sending the configuration request information to the network side device. The configuration request indication information is used to indicate whether the first UE is allowed to send the configuration request information.

Optionally, the prohibit timer is started when the first UE has sent the configuration request information to the network side device; and
the first UE is prohibited from sending the configuration request information to the network side device when the prohibit timer is running.

Optionally, the radio frequency unit 1501 is further configured to:
a second receiving module, configured to receive configuration information sent by the network side device, where the configuration information is determined by the network side device based on the configuration request information.

The UE in this embodiment of this application can improve data transmission performance of the UE.

Specifically, the UE of this embodiment of this application further includes: an instruction or a program stored in the memory 1509 and executable on the processor 1510. The processor 1510 calls the instruction or the program in the memory 1509 to perform the method performed by each module shown in FIG. 8, and achieve the same technical effect. To avoid repetition, details are not described herein again.

An embodiment of this application further provides a network side device, including a processor and a communication interface. The communication interface is configured to receive configuration request information sent by a first user equipment UE. The configuration request information is used to indicate a configuration resource expected by the first UE. The embodiment of the network side device corresponds to the method embodiment of the network side device. The implementation processes and implementations of the method embodiment are all applicable to the embodiment of the network side device, and the same technical effects can be achieved.

Specifically, an embodiment of this application further provides a network side device. As shown in FIG. 16, the network device 1600 includes: an antenna 1601, a radio frequency apparatus 1602, and a baseband apparatus 1603. The antenna 1601 is connected to the radio frequency apparatus 1602. In an uplink direction, the radio frequency apparatus 1602 receives information through the antenna 1601, and sends the received information to the baseband apparatus 1603 for processing. In a downlink direction, the baseband apparatus 1603 processes information to be sent, and sends the processed information to the radio frequency apparatus 1602. The radio frequency apparatus 1602 processes the received information, and then sends out the processed information through the antenna 1601.

The foregoing frequency band processing apparatus may be located in the baseband apparatus 1603. In the foregoing embodiment, the method performed by the network side device may be implemented in the baseband apparatus 1603. The baseband apparatus 1603 includes a processor 1604 and a memory 1605.

The baseband apparatus 1603 may include, for example, at least one baseband board, and the baseband board is provided with a plurality of chips. As shown in FIG. 16, one of the chips is, for example, the processor 1604, connected to the memory 1605 to call a program in the memory 1605, to perform the operations of the network device shown in the foregoing method embodiment.

The baseband apparatus 1603 may further include a network interface 1606, configured to exchange information with the radio frequency apparatus 1602. The interface is, for example, a common public radio interface (common public radio interface, CPRI for short).

The radio frequency apparatus 1602 is configured to receive configuration request information sent by a first user equipment UE, where the configuration request information is used to indicate a configuration resource expected by the first UE.

Optionally, the configuration request information includes at least one of the following:
an expected band configuration, a UE type, an expected measurement configuration, and an unexpected band configuration.

Optionally, the expected band configuration includes at least one of the following:
an expected band, an expected band combination, an expected carrier aggregation CA band, an expected multi-radio access technology dual connectivity MR-DC band combination, and an expected time-division multiplexing pattern TDM pattern, where the expected TDM pattern includes at least one of the following: a band combination identifier and a carrier aggregation identifier.

Optionally, the UE type includes the following item:
a multi-SIM UE type.

Optionally, the Multi-SIM UE type is further used to indicate at least one of the following:
a dual SIM dual active type;
a dual transmit capability; and
a dual receive capability.

Optionally, the expected measurement configuration includes at least one of the following:
a measurement object, a measurement frequency, and a measurement band.

Optionally, the unexpected band configuration includes at least one of the following:
an unexpected band, an unexpected band combination, an unexpected carrier, and an unexpected carrier combination.

Optionally, the configuration request information is obtained through at least one of the following:
a UE assistance information message, a radio resource control RRC reconfiguration complete message, a UE capability information message, an RRC setup request message, an RRC setup complete message, a registration request message, and a service request message.

Optionally, the radio frequency apparatus 1602 is further configured to:
in a case that a preset condition is met, receive the configuration request information sent by the first UE, where
the preset condition includes at least one of the following:
   that the first UE is configured to be allowed to send the configuration request information;
   that the first UE is connection to the network side;
   that when a second UE establishes a connected to the network side, the second UE and the first UE belong to a same terminal;
   that the first UE detects that there is in-device coexistence IDC interference;
   that the configuration resource expected by the first UE is changed;
   that the first UE has not sent the configuration request information after establishing a connection to the network side; and
   that a prohibit timer is not running, where the prohibit timer is used to prohibit the first UE from sending the configuration request information to the network side device.

Optionally, the radio frequency apparatus 1602 is further configured to:
send configuration negotiation control information to the first UE, where the configuration negotiation control information is used to indicate whether the network side device supports processing the configuration request information of the first UE.

Optionally, the configuration negotiation control information is sent through at least one of the following:
a UE capability enquiry message, an RRC reconfiguration message, and system information.

Optionally, the configuration negotiation control information includes at least one of the following: duration of a prohibit timer and configuration request indication information.

The prohibit timer is used to prohibit the first UE from sending the configuration request information to the network side device. The configuration request indication information is used to indicate whether the first UE is allowed to send the configuration request information.

Optionally, the prohibit timer is started when the first UE has sent the configuration request information to the network side device; and
the first UE is prohibited from sending the configuration request information to the network side device when the prohibit timer is running.

Optionally, the radio frequency apparatus 1602 is further configured to:
send configuration information to the first UE, where the configuration information is determined by the network side device based on the configuration request information.

The network side device in this embodiment of this application can improve data transmission performance of a UE.

Specifically, the network side device in this embodiment of the present invention further includes: an instruction or a program stored in the memory 1605 and executable on the processor 1604. The processor 1604 calls the instruction or the program in the memory 1605 to perform the method performed by each module shown in FIG. 11, and achieve the same technical effect. To avoid repetition, details are not described herein again.

An embodiment of this application further provides a readable storage medium. The readable storage medium may be non-volatile or volatile. The readable storage medium stores a program or an instruction. When the program or the instruction is executed by a processor, the processes of the foregoing embodiment of the request information sending method are implemented, and the same technical effects can be achieved. To avoid repetition, details are not described herein again.

The processor may be the processor in the terminal described in the foregoing embodiment. The readable storage medium includes a computer-readable storage medium, such as a computer read-only memory (Read-Only Memory, ROM), a random access memory (Random Access Memory, RAM), a magnetic disk, an optical disc, and the like.

An embodiment of this application further provides a chip, including a processor and a communication interface. The communication interface is coupled to the processor. The processor is configured to run a program or an instruction to implement the processes of the foregoing embodiment of the request information sending method, and the same technical effects can be achieved. To avoid repetition, details are not described herein again.

It should be understood that, the chip mentioned in this embodiment of this application may also be referred to as a system on a chip, a system chip, a chip system, a system-on-chip, or the like.

An embodiment of this application further provide a computer program product. The computer program product is stored in a non-transitory readable storage medium. The computer program product is executed by at least one processor to implement the processes of the foregoing embodiment of the request information sending method, and the same technical effects can be achieved. To avoid repetition, details are not described herein again.

It should be noted that, the term "include", "comprise", or any other variation thereof in this specification is intended to cover a non-exclusive inclusion, so that a process, method, article, or device including a series of elements includes not only those elements but also other elements not explicitly listed, or elements inherent to such a process, method, article, or device. Without more restrictions, the elements defined by the sentence "including a..." do not exclude the existence of other identical elements in the process, method, article, or device including the elements. In addition, it should be noted that, the scope of the methods and apparatuses in the implementations of this application is not limited to performing the functions in the order shown or discussed, but may further include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the descriptions in the foregoing implementations, a person skilled in the art may clearly learn that the method according to the foregoing embodiment may be implemented by software plus a necessary universal hardware platform, or by using hardware, but in many cases, the former is a preferred implementation. Based on such an understanding, the technical solutions of this application essentially or the part contributing to the related art may be implemented in the form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The embodiments of this application have been described above with reference to the accompanying drawings, but this application is not limited to the foregoing specific implementations. The foregoing specific implementations are only illustrative and not restrictive. Under the inspiration of this application, without departing from the purpose of this application and the scope of protection of the claims, a person of ordinary skill in the art can still make many forms, which all fall within the protection of this application.

## Claims

1. A request information sending method, comprising:
sending, by a first user equipment UE, configuration request information to a network side device, wherein the configuration request information is used to indicate a configuration resource expected by the first UE.

2. The request information sending method according to claim 1, wherein the configuration request information comprises at least one of following:
an expected band configuration, a UE type, an expected measurement configuration, and an unexpected band configuration.

3. The request information sending method according to claim 2, wherein the expected band configuration comprises at least one of following:
an expected band, an expected band combination, an expected carrier aggregation CA band, an expected multi-radio access technology dual connectivity MR-DC band combination, and an expected time-division multiplexing pattern TDM pattern, wherein the expected TDM pattern comprises at least one of following: a band combination identifier and a carrier aggregation identifier.

4. The request information sending method according to claim 2, wherein the UE type comprises following item:
a multi-SIM UE type.

5. The request information sending method according to claim 4, wherein the multi-SIM UE type is further used to indicate at least one of following:
a dual SIM dual active type;
a dual transmit capability; and
a dual receive capability.

6. The request information sending method according to claim 2, wherein the expected measurement configuration comprises at least one of following:
a measurement object, a measurement frequency, and a measurement band.

7. The request information sending method according to claim 2, wherein the unexpected band configuration comprises at least one of following:
an unexpected band, an unexpected band combination, an unexpected carrier, and an unexpected carrier combination.

8. The request information sending method according to claim 1, wherein the configuration request information is sent through at least one of following:
a UE assistance information message, a radio resource control RRC reconfiguration complete message, a UE capability information message, an RRC setup request message, an RRC setup complete message, a registration request message, and a service request message.

9. The request information sending method according to any one of claims 1 to 8, wherein the sending, by a first UE, configuration request information to a network side device comprises:
sending, by the first UE, the configuration request information to the network side device in a case that a preset condition is met, wherein
the preset condition comprises at least one of following:
that the first UE is configured to be allowed to send the configuration request information;
that the first UE is connected to the network side;
that when a second UE establishes a connection to the network side, the second UE and the first UE belong to a same terminal;
that the first UE detects that there is in-device coexistence IDC interference;
that the configuration resource expected by the first UE is changed;
that the first UE has not sent the configuration request information after establishing a connection to the network side; and
that a prohibit timer is not running, wherein the prohibit timer is used to prohibit the first UE from sending the configuration request information to the network side device.

10. The request information sending method according to any one of claims 1 to 8, wherein before the sending, by a first UE, configuration request information to a network side device, the method further comprises:
receiving, by the first UE, configuration negotiation control information sent by the network side device, wherein the configuration negotiation control information is used to indicate whether the network side device supports processing the configuration request information of the first UE; and
the sending, by a first UE, configuration request information to a network side device comprises:
sending, by the first UE, the configuration request information to the network side device in a case that the configuration negotiation control information indicates that the network side device supports processing the configuration request information of the first UE.

11. The request information sending method according to claim 10, wherein the configuration negotiation control information is obtained through at least one of following:
a UE capability enquiry message, an RRC reconfiguration message, and system information.

12. The request information sending method according to claim 10, wherein the configuration negotiation control information comprises at least one of following: duration of a prohibit timer and configuration request indication information, wherein
the prohibit timer is used to prohibit the first UE from sending the configuration request information to the network side device, and the configuration request indication information is used to indicate whether the first UE is allowed to send the configuration request information.

13. The request information sending method according to claim 12, wherein the prohibit timer is started when the first UE has sent the configuration request information to the network side device; and
the first UE is prohibited from sending the configuration request information to the network side device when the prohibit timer is running.

14. The request information sending method according to any one of claims 1 to 8, wherein the method further comprises:
receiving, by the first UE, configuration information sent by the network side device, wherein the configuration information is determined by the network side device based on the configuration request information.

15. A request information sending method, comprising:
receiving, by a network side device, configuration request information sent by a first user equipment UE, wherein the configuration request information is used to indicate a configuration resource expected by the first UE.

16. The request information sending method according to claim 15, wherein the configuration request information comprises at least one of following:
an expected band configuration, a UE type, an expected measurement configuration, and an unexpected band configuration.

17. The request information sending method according to claim 15, wherein the expected band configuration comprises at least one of following:
an expected band, an expected band combination, an expected carrier aggregation CA band, an expected multi-radio access technology dual connectivity MR-DC band combination, and an expected time-division multiplexing pattern TDM pattern, wherein the expected TDM pattern comprises at least one of following: a band combination identifier and a carrier aggregation identifier.

18. The request information sending method according to claim 16, wherein the UE type comprises following item:
a multi-SIM E type.

19. The request information sending method according to claim 18, wherein the multi-SIM UE type is further used to indicate at least one of following:
a dual SIM dual active type;
a dual transmit capability; and
a dual receive capability.

20. The request information sending method according to claim 16, wherein the expected measurement configuration comprises at least one of following:
a measurement object, a measurement frequency, and a measurement band.

21. The request information sending method according to claim 16, wherein the unexpected band configuration comprises at least one of following:
an unexpected band, an unexpected band combination, an unexpected carrier, and an unexpected carrier combination.

22. The request information sending method according to claim 15, wherein the configuration request information is obtained through at least one of following:
a UE assistance information message, a radio resource control RRC reconfiguration complete message, a UE capability information message, an RRC setup request message, an RRC setup complete message, a registration request message, and a service request message.

23. The request information sending method according to any one of claims 15 to 22, wherein the receiving, by a network side device, configuration request information sent by a first UE comprises:
in a case that a preset condition is met, receiving, by the network side device, the configuration request information sent by the first UE, wherein
the preset condition comprises at least one of following:
that the first UE is configured to be allowed to send the configuration request information;
that the first UE is connected to the network side;
that when a second UE establishes a connection to the network side, the second UE and the first UE belong to a same terminal;
that the first UE detects that there is in-device coexistence IDC interference;
that the configuration resource expected by the first UE is changed;
that the first UE has not sent the configuration request information after establishing a connection to the network side; and
that a prohibit timer is not running, wherein the prohibit timer is used to prohibit the first UE from sending the configuration request information to the network side device.

24. The request information sending method according to any one of claims 15 to 22, wherein before the receiving, by a network side device, configuration request information sent by a first UE, the method further comprises:
sending, by the network side device, configuration negotiation control information to the first UE, wherein the configuration negotiation control information is used to indicate whether the network side device supports processing the configuration request information of the first UE.

25. The request information sending method according to claim 24, wherein the configuration negotiation control information is sent through at least one of following:
a UE capability enquiry message, an RRC reconfiguration message, and system information.

26. The request information sending method according to claim 24, wherein the configuration negotiation control information comprises at least one of following: duration of a prohibit timer and configuration request indication information, wherein
the prohibit timer is used to prohibit the first UE from sending the configuration request information to the network side device, wherein the configuration request indication information is used to indicate whether the first UE is allowed to send the configuration request information.

27. The request information sending method according to claim 26, wherein the prohibit timer is started when the first UE has sent the configuration request information to the network side device; and
the first UE is prohibited from sending the configuration request information to the network side device when the prohibit timer is running.

28. The request information sending method according to any one of claims 15 to 22, wherein the method further comprises:
sending, by the network side device, configuration information to the first UE, wherein the configuration information is determined by the network side device based on the configuration request information.

29. A request information sending apparatus, comprising:
a sending module, configured to send configuration request information to a network side device, wherein the configuration request information is used to indicate a configuration resource expected by a first UE.

30. The request information sending apparatus according to claim 29, wherein the configuration request information comprises at least one of following:
an expected band configuration, a UE type, an expected measurement configuration, and an unexpected band configuration.

31. The request information sending apparatus according to claim 29, wherein the sending module is specifically configured to:
send the configuration request information to the network side device in a case that a preset condition is met, wherein
the preset condition comprises at least one of following:
that the first UE is configured to be allowed to send the configuration request information;
that the first UE is connected to the network side;
that when a second UE establishes a connection to the network side, the second UE and the first UE belong to a same terminal;
that the first UE detects that there is in-device coexistence IDC interference;
that the configuration resource expected by the first UE is changed;
that the first UE has not sent the configuration request information after establishing a connection to the network side; and
that a prohibit timer is not running, wherein the prohibit timer is used to prohibit the first UE from sending the configuration request information to the network side device.

32. The request information sending apparatus according to claim 29, wherein the apparatus further comprises:
a first receiving module, configured to receive configuration negotiation control information sent by the network side device, wherein the configuration negotiation control information is used to indicate whether the network side device supports processing the configuration request information of the first UE; and
the sending module is specifically configured to:
send the configuration request information to the network side device in a case that the configuration negotiation control information indicates that the network side device supports processing the configuration request information of the first UE.

33. The request information sending apparatus according to claim 29, wherein the apparatus further comprises:
a second receiving module, configured to receive configuration information sent by the network side device, wherein the configuration information is determined by the network side device based on the configuration request information.

34. A request information sending apparatus, comprising:
a receiving module, configured to receive configuration request information sent by a first user equipment UE, wherein the configuration request information is used to indicate a configuration resource expected by the first UE.

35. The request information sending apparatus according to claim 29, wherein the configuration request information comprises at least one of following:
an expected band configuration, a UE type, an expected measurement configuration, and an unexpected band configuration.

36. A UE, wherein the UE is a first UE, and comprises a processor, a memory, and a program or an instruction stored in the memory and executable on the processor, wherein when the program or the instruction is executed by the processor, steps of the request information sending method according to any one of claims 1 to 14 are implemented.

37. A network side device, comprising a processor, a memory, and a program or an instruction stored in the memory and executable on the processor, wherein when the program or the instruction is executed by the processor, steps of the request information sending method according to any one of claims 15 to 28 are implemented.

38. A readable storage medium, storing a program or an instruction, wherein when the program or the instruction is executed by a processor, steps of the request information sending method according to any one of claims 1 to 14 are implemented; or when the program or the instruction is executed by a processor, steps of the request information sending method according to any one of claims 15 to 28 are implemented.

39. A chip, comprising a processor and a communication interface, wherein the communication interface is coupled to the processor, and the processor is configured to run a program or an instruction to implement steps of the request information sending method according to any one of claims 1 to 14; or to implement steps of the request information sending method according to any one of claims 15 to 28.

40. A computer program product, stored in a non-volatile storage medium, wherein the program product is executed by at least one processor to implement steps of the request information sending method according to any one of claims 1 to 14; or to implement steps of the request information sending method according to any one of claims 15 to 28.

41. A communication device, configured to perform steps of the request information sending method according to any one of claims 1 to 14; or to implement steps of the request information sending method according to any one of claims 15 to 28.
